# FASCICULE DE BREVET EUROPEEN

(11) **EP 3 820 681 B1**
(45) Date de publication et mention de la délivrance du brevet: **12.06.2024**
(21) Numéro de dépôt: 19737117.2
(22) Date de dépôt: 10.07.2019
(51) Int. Cl.: B29C 70/10, B32B 7/06, B29B 15/10, B29C 70/22, B29C 70/54, B29C 70/42, B32B 5/02, B32B 5/08, B32B 5/26

(54) **CALE PELABLE À RÉSISTANCE ACCRUE**
ABZIEHBARE UNTERLEGSCHEIBE MIT ERHÖHTER FESTIGKEIT
PEELABLE SHIM HAVING INCREASED STRENGTH

(30) Priorité: 11.07.2018 FR 1856368
(43) Date de publication de la demande: 19.05.2021
(73) Titulaire: Société LAMECO, 78190 Trappes (FR)
(72) Inventeur: GASTEL, Daniel, André, 78370 Plaisir les Gatines (FR)
(74) Mandataire: Berger, Helmut
(86) Numéro de dépôt international: PCT/EP2019/068634
(87) Numéro de publication internationale: WO 2020/011899

(56) Documents cités:
- US-A- 4 744 857
- US-A1- 2003 203 174

## Description

La présente invention concerne des cales pelables résistantes à des conditions de température et de sollicitation mécanique exigeantes, ainsi, et c'est remarquable, adaptées à un environnement chimique agressif ou encore à un environnement humide.

Pour mémoire, les cales pelables sont des produits laminés présentant une épaisseur réglable par délitage dont le mode de fabrication est particulier. L'invention concerne donc aussi le procédé de fabrication de tels produits.

Pour mieux cerner ce qui est désigné par le terme « cale pelable », on précise qu'il s'agit d'un produit comprenant un empilement serré de feuilles solides reliées les unes aux autres par leurs surfaces apposées par l'intermédiaire d'un matériau adhésif en quantité suffisamment faible pour que celui-ci soit pratiquement invisible. Chaque feuille solide présente une résistance intrinsèque au déchirement, et le matériau adhésif relie l'une à l'autre deux feuilles adjacentes par une force de liaison plus faible que la résistance des feuilles au déchirement, ce dont il résulte que chaque feuille peut être détachée de l'empilement sans qu'elle ne se déchire.

Ces objets sont largement utilisés comme cales d'épaisseur dans des ensembles mécaniques complexes, en particulier dans l'aéronautique.

Les ensembles mécaniques dans lesquels les cales pelables trouvent notamment leur application peuvent comporter de nombreuses pièces, présentant chacune des tolérances dimensionnelles. La somme des tolérances crée des jeux qui peuvent être significatifs et qu'il est nécessaire de compenser afin de permettre aux ensembles mécaniques d'assurer correctement leurs fonctions.

On utilise à cet effet des cales de réglage, ou cales d'épaisseur, qui avantageusement sont pelables. Il peut s'agir de cales de feuilles métalliques, de cales de feuilles de polymère organique thermoplastique, ou de cales de feuilles de fibres tissées.

Ces cales pelables sont en tout état de cause composées de lamelles (feuilles) fines superposées et collées entre elles de manière à définir une épaisseur choisie perpendiculairement au plan des feuilles, et dont les contours latéraux, dans le plan des feuilles sont usinés pour s'adapter à la géométrie des espaces à caler.

Le réglage de la cale se fait par la réduction de son épaisseur en pelant une ou plusieurs de ces lamelles et en insérant la cale à l'endroit où le jeu a été constaté.

On utilise des tissus de fibres de verre, de carbone, de céramique ou d'aramide avec pour objectif de réduire le poids des pièces et d'obtenir une résistance mécanique élevée, ainsi qu'une résistance à la chaleur.

Le document US 2003/0203174 A1 divulgue un procédé de fabrication d'une carte de circuit imprimé multicouche utilisant un pli de liaison comprenant un composite fluoropolymère renforcé et une composition adhésive thermodurcissable.

Le document US 4,744,857 divulgue un procédé de décapage de fibres fluoropolymères, qui peuvent ensuite être collées ensemble ou avec d'autres matériaux pour former des matériaux composites.

Les cales en matériaux fibreux sont aussi utilisées préférentiellement avec des pièces en matériaux composites pour éviter les usures par abrasion entre matériaux de nature différente.

Dans ce contexte, un but de l'invention est de proposer une plaque pelable qui pallie les difficultés décrites ci-dessus, et qui offre une résistance accrue en environnement chimique agressif, ou en environnement humide.

Pour cela il est proposé un procédé de fabrication d'une plaque pelable selon la revendication 1.

Ce procédé mène à des cales offrant les qualités attendues : résistance aux contraintes mécaniques, notamment les chocs, résistance en environnement chimique agressif ou environnement humide, et résistance à des températures élevées.

Selon des caractéristiques avantageuses,
- les fibres tissées forment un maillage de type satin ;
- les feuilles sont, avant d'être encollées, revêtues dudit dépôt par micropulvérisation ;
- la résine est une résine cyanate ester ;
- la transformation en résine thermodurcie comprend un chauffage à 180°C ;
- les fibres sont des fibres de verre, de carbone, de céramique ou d'aramide.

Il est également proposé une plaque pelable selon la revendication 7.

Et l'invention porte sur l'utilisation, selon la revendication 8, comme cale d'épaisseur d'une plaque pelable.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue en perspective en perspective du tissu utilisé dans l'invention avant imprégnation
- la Figure 2 est une vue en perspective d'un tissu de la Figure 1 imprégné aux fins de l'invention,
- la Figure 3 est une vue en perspective du produit en cours d'assemblage.

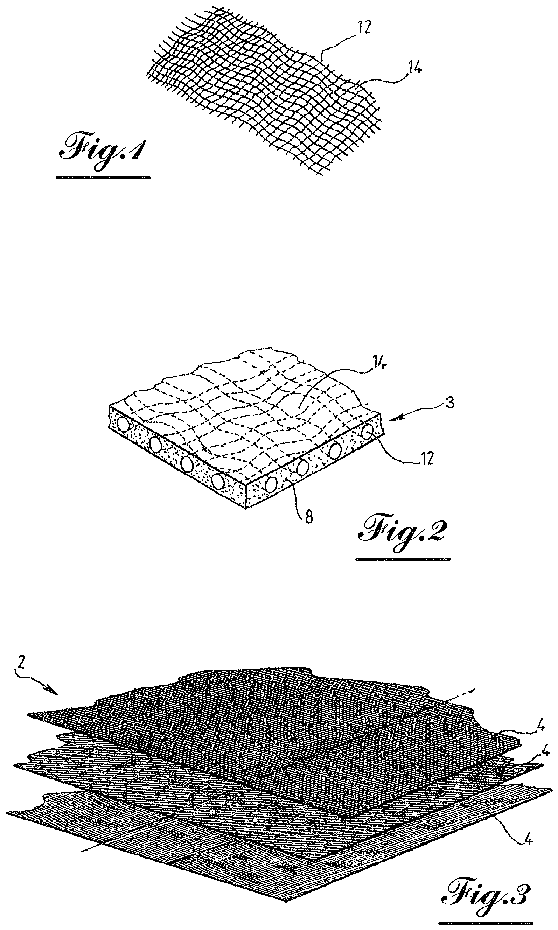

L'invention concerne un produit laminé comprenant un empilement de feuilles de fibres tissées telles que la feuille 14 représentée en figure 1 composée d'un tissage de type satin de fibres 12 qui peuvent être en particulier des fibres de verre.

Ces fibres 12 sont entrecroisées, et peuvent être des fibres de verre, de carbone, de céramique ou d'aramide, ou de tout autre matériau présentant des propriétés mécaniques comparables. Plusieurs types de fibres peuvent être mélangés dans un même tissu.

Des pièces du tissu fibreux 12 mentionné ci-dessus sont d'abord découpées et mises aux dimensions souhaitées. Chacune d'entre elle constituera une feuille du produit laminé après traitement.

Ces feuilles font l'objet d'une imprégnation par pulvérisation ou micropulvérisation d'un polymère fluoré, dans le mode de réalisation présenté, le PTFE ou poly-tétra-fluoro-éthylène. Une quantité minimale de PTFE est appliquée en sorte que les feuilles soient revêtues sans être inutilement alourdies ou épaissies, comme cela est représenté en figure 2, où une feuille revêtue 3 est visible, composée de la feuille 14 avec une imprégnation de PTFE 8. Les fibres 12 sont noyées dans un fin environnement de PTFE 8.

Les feuilles revêtues 3 sont ensuite traitées avec un agent de décapage pour permettre leur collage les unes aux autres. L'agent de décapage (ou agent corrosif) peut être l'agent Tetra-Etch disponible dans le commerce (il s'agit d'une solution organique). D'autres méthodes de décapage chimique ou physique peuvent être utilisées comme une solution alcaline (soude, potasse), une autre solution organique de décapage, ou une exposition au feu ou à un plasma.

Une fois l'effet de décapage obtenu, l'agent de décapage est éloigné ou retiré et on effectue un encollage des feuilles, sur une face ou les deux faces, avec une préparation pour résine thermodurcissable, comprenant un solvant, le monomère ou précurseur, et éventuellement l'agent d'activation chimique. Dans un mode de réalisation préféré, on utilise une résine cyanate ester, qui permet au produit final de supporter des températures élevées.

L'opération d'encollage est faite par tout type d'encolleuse, pulvérisation au moyen d'une buse ou d'un pistolet, par application au rouleau manuel, par impression sur machine de type offset, ou encore par trempage du tissu dans un bain de matériau adhésif.

La résine thermodurcissable constitue après son traitement de réticulation du monomère en polymère un matériau adhésif, sa quantité et son traitement étant choisis et adaptés de telle sorte que la force de liaison liant les deux feuilles est plus faible que la résistance de ces feuilles au déchirement, ce dont il résulte que chaque feuille peut être détachée de l'empilement sans se déchirer.

La résine est polymérisée, soit par traitement thermique, soit à température ambiante. Outre une résine cyanate-ester, il peut s'agir d'une résine époxy, phénolique, vinyl-ester ou polyvinylique. Il est de préférence mono-constituant, mais il peut être un mélange de résines de différentes natures chimiques.

Des adjuvants sont ajoutés, dans certains cas, à la résine. Ces adjuvants peuvent comprendre des durcisseurs pour conférer au produit laminé des caractéristiques mécaniques déterminées, de dureté, de rigidité, ou de résistance en traction et en compression.

Les feuilles de tissu encollé 4 subissent enfin une opération de polymérisation finale sous pression. Cette opération consiste à disposer les feuilles en pile 2, comme représenté en figure 3, entre deux supports plans parallèles, ces supports étant pressés l'un contre l'autre à température ambiante ou à chaud dans une presse chauffante pendant une durée prédéterminée. La résine polymérise.

Cette opération confère au produit laminé les qualités mécaniques recherchées de parallélisme, de planéité, de cohésion et de pelabilité.

Les supports plans sont constitués de deux plateaux d'acier calibrés de forte épaisseur, par exemple 50 mm. Les plateaux sont traversés en périphérie par des tiges filetés ou des vis, sur lesquels un serrage est appliqué.

La polymérisation est menée avec des cycles de température à 120°C et 180°C.

Enfin, le produit laminé est usiné ou découpé si nécessaire aux dimensions adéquates, pour qu'il ait, dans le plan des feuilles, les bonnes formes et dimensions.

Les produits laminés de ce type sont bien adaptés pour servir de cales pour l'industrie aéronautique, par exemple pour des avions ou des hélicoptères, y compris dans des zones très chaudes comme les moteurs, par exemple dans un environnement à 400°C.

Ces produits laminés peuvent également servir de cales pelables dans d'autres domaines, généralement partout où des caractéristiques de légèreté et de résistance mécanique et thermique sont recherchées, et peuvent être utilisés dans des environnements chimiques agressifs, ou des environnements humides.

Ils résistent à des chocs ponctuels, même violents, créés par une pointe venant heurter leur surface.

## Revendications

1. Procédé de fabrication d'une plaque pelable, comprenant l'encollage de fibres (12) tissées avec une préparation de composants de base pour résine thermodurcissable en sorte de former des feuilles encollées (4), l'empilement desdites feuilles encollées (4) en une pile (2), et la transformation des composants de base en résine thermodurcie, la pile (2) des feuilles étant maintenue sous pression, procédé dans lequel les fibres (12) tissées, avant d'être encollées, sont revêtues d'un dépôt d'un polymère fluoré (8), le polymère fluoré (8) est du polytétrafluoroéthylène et avant l'encollage, les feuilles (3) de fibres revêtues dudit dépôt sont décapées.

2. Procédé de fabrication d'une plaque pelable selon la revendication 1, **caractérisé en ce que** les fibres (12) tissées forment un maillage de type satin.

3. Procédé de fabrication d'une plaque pelable selon l'une des revendications 1 et 2, **caractérisé en ce que** les fibres (12) sont, avant d'être encollées, revêtues dudit dépôt par micropulvérisation.

4. Procédé de fabrication d'une plaque pelable selon l'une des revendications 1 à 3, **caractérisé en ce que** la résine est une résine cyanate ester.

5. Procédé de fabrication d'une plaque pelable selon l'une des revendications 1 à 4, **caractérisé en ce que** la transformation en résine thermodurcie comprend un chauffage à 180°C.

6. Procédé de fabrication d'une plaque pelable selon l'une des revendications 1 à 4, **caractérisé en ce que** les fibres (12) sont des fibres de verre, de carbone, de céramique ou d'aramide.

7. Plaque pelable constituée d'une pile (2) de feuilles de fibres tissées qui sont revêtues d'un polymère fluoré qui est du polytétrafluoroéthylène, maintenues entre elles par une résine thermodurcie et décapées avant encollage.

8. Utilisation comme cale d'épaisseur d'une plaque pelable selon la revendication 7, ou obtenue selon un procédé de fabrication selon l'une des revendications 1 à 6.

## Patentansprüche

1. Verfahren zur Herstellung einer abziehbaren Platte, umfassend das Verkleben von gewebten Fasern (12) mit einer Zubereitung aus Basiskomponenten für ein wärmehärtbares Harz, um verklebte Bahnen (4) zu bilden, die Stapelung der verklebten Bahnen (4) in einen Stapel (2) und die Umwandlung der Basiskomponenten in wärmegehärtetes Harz, wobei der Stapel (2) der Bahnen unter Druck gehalten wird, ein Verfahren, bei dem die gewebten Fasern (12), bevor sie verklebt werden, mit einer Ablage eines fluorierten Polymers (8) verkleidet werden, wobei das fluorierte Polymer (8) Polytetrafluorethylen ist und vor der Verklebung die Bahnen (3) aus mit der Ablage verkleideten Fasern abgebeizt werden.

2. Verfahren zur Herstellung einer abziehbaren Platte nach Anspruch 1, **dadurch gekennzeichnet, dass** die gewebten Fasern (12) eine Vernetzung vom Typ Satin bilden.

3. Verfahren zur Herstellung einer abziehbaren Platte nach einem der Ansprüche 1 und 2, **dadurch gekennzeichnet, dass** die Fasern (12), bevor sie verklebt werden, mit der Ablage durch Mikrozerstäubung beschichtet werden.

4. Verfahren zur Herstellung einer abziehbaren Platte nach einem der Ansprüche 1 bis 3, **dadurch gekennzeichnet, dass** das Harz ein Cyanatesterharz ist.

5. Verfahren zur Herstellung einer abziehbaren Platte nach einem der Ansprüche 1 bis 4, **dadurch gekennzeichnet, dass** die Umformung in wärmehärtbares Harz eine Erhitzung auf 180 °C umfasst.

6. Verfahren zur Herstellung einer abziehbaren Platte nach einem der Ansprüche 1 bis 4, **dadurch gekennzeichnet, dass** die Fasern (12) Glas-, Kohlenstoff-, Keramik- oder Aramidfasern sind.

7. Abziehbare Platte, bestehend aus einem Stapel (2) von gewebten Fasern, die mit einem fluorierten Polymer verkleidet sind, wobei es sich um Polytetrafluorethylen handelt, untereinander gehalten durch ein wärmehärtbares Harz und abgebeizt vor der Verklebung.

8. Verwendung als Unterlegscheibe mit der Dicke einer abziehbaren Platte nach Anspruch 7 oder erhalten gemäß einem Verfahren zur Herstellung nach einem der Ansprüche 1 bis 6.

## Claims

1. A method of manufacturing a peelable plate, comprising sizing fibers (12) woven with a preparation of base components for thermosetting resin so as to form sized sheets (4), stacking said sized sheets (4) into a stack (2), and the transformation of the base components into a thermoset resin, the stack (2) of sheets being maintained under pressure, method wherein the woven fibers (12), before being sized, are coated with a deposit of a fluoropolymer (8), the fluoropolymer (8) being polytetrafluoroethylene and prior to sizing, the sheets (3) of fibers coated with said deposit are pickled.

2. The method of manufacturing a peelable plate according to claim 1, **characterized in that** the woven fibers (12) form a satin-type mesh.

3. The method of manufacturing a peelable plate according to one of claims 1 and 2, **characterized in that** the fibers (12) are, before being sized, coated with said deposit by microspraying.

4. The method of manufacturing a peelable plate according to one of claims 1 to 3, **characterized in that** the resin is a cyanate ester resin.

5. The method of manufacturing a peelable plate according to one of claims 1 to 4, **characterized in that** the transformation into a thermoset resin comprises heating to 180°C.

6. Method of manufacturing a peelable plate according to one of claims 1 to 4, **characterized in that** the fibers (12) are glass, carbon, ceramic or aramid fibers.

7. A peelable plate consisting of a stack (2) of woven fiber sheets which are coated with a fluoropolymer which is polytetrafluoroethylene, held together by a thermoset resin and stripped before sizing.

8. A use as a shim of a peelable plate according to claim 7 or obtained according to a manufacturing method according to one of claims 1 to 6.
